Europäisches Patentamt

European Patent Office

Office européen des brevets

(19)

(11) Veröffentlichungsnummer: **0 092 516**
**A1**

(12) # EUROPÄISCHE PATENTANMELDUNG

(21) Anmeldenummer: 83810141.8

(22) Anmeldetag: 08.04.83

(51) Int. Cl.³: **C 08 G 59/44, C 08 L 63/00**

(30) Priorität: 14.04.82 US 368346

(71) Anmelder: **CIBA-GEIGY AG, Patentabteilung Postfach, CH-4002 Basel (CH)**

(43) Veröffentlichungstag der Anmeldung: 26.10.83
Patentblatt 83/43

(84) Benannte Vertragsstaaten: **AT BE CH DE FR GB IT LI NL**

(72) Erfinder: **Holley, Leonard, 5912 C-1 Monroe Road, Charlotte, N.C. 28212 (US)**

(54) Heisshärtbare Epoxy/Acrylat-Einkomponentenzusammensetzungen und daraus erhaltene gehärtete Produkte.

(57) Eine feststoffreiche oder lösungsmittelfreie, heisshärtbare Einkomponentenharzzusammensetzung besteht aus einem Gemisch eines Epoxyharzes und eines Acrylat- oder Methacrylatesters in Gegenwart einer wirksamen Menge eines hitzeempfindlichen Latenten Härters. Die härtbare Zusammensetzung ist bei Normaltemperaturen Lagerbeständig, härtet jedoch rasch bei Temperaturen oberhalb 130°C und ergibt dabei gehärtete Zusammensetzungen, die als Grundierschichten und in sonstigen industriellen Anstrichen verwendbar sind.

EP 0 092 516 A1

## Heisshärtbare Epoxy/Acrylat-Einkomponentenzusammensetzungen und daraus erhaltene gehärtete Produkte

Die vorliegende Erfindung betrifft härtbare Zusammensetzungen, die aus einem Gemisch eines Epoxyharzes und eines Acrylat- oder Methacrylatesters in Gegenwart eines latenten Härters bestehen, sowie die daraus erhaltenen gehärteten Produkte.

Epoxidharze sind wohlbekannte Zusammensetzungen, die sehr vielseitige Anwendungen gefunden haben und mit den verschiedensten Härtern zur Bildung gehärteter Zusammensetzungen umgesetzt worden sind. Besonders nützlich als Härter sind aliphatische Amine. Bei manchen Anwendungsfällen fehlen jedoch gewisse wünschenswerte Eigenschaften in mit aliphatischen Aminen gehärteten Epoxidharzen. Ferner sind solche Systeme viskos, besonders bei niedrigen Temperaturen, und ergeben keine ordnungsgemässe Benetzung des Substrats, auf das sie aufgetragen werden. Schliesslich gehen solche Systeme, insbesondere in grossen Massen, schwer kontrollierbare exotherme Reaktionen ein.

Aus einem Epoxidharz, einem Polyacrylatester oder Polymethacrylatester und einem aliphatischen Polyamin bestehende, härtbare Epoxidharzzusammensetzungen sind aus der U.S. Patentschrift Nr. 4 051 195 bekannt.

Die härtbare Zusammensetzung nach diesem Patent ist eine Mischung eines mehr als eine 1,2-Epoxigruppe pro Molekül enthaltenden Epoxidharzes und eines Polyacrylat- oder Polymethacrylatesters eines Polyols, wobei dieser Ester mehr als eine Acrylat- oder Methacrylatendgruppe enthält und wobei das Epoxidharz und der Ester in einem Gewichtsverhält-

nis von etwa 100 Teilen Epoxidharz zu etwa 5 bis etwa 100
Teilen Ester vorliegen. Die Mischung aus Epoxidharz und
Polyacrylat oder Polymethacrylat wird mit einem aliphatischen, mindestens 3 Aminwasserstoffatome pro Molekül enthaltenden Polyamin in einer Menge von etwa 0,75 bis etwa
1,25 Aminwasserstoffatomen auf je eine Epoxygruppe und ungesättigte Acrylgruppe gehärtet.

Bei der Umsetzung mit aliphatischen Polyaminen härten die härtbaren Zusammensetzungen dieses Patents sogar in
dünnen Filmen bei niedrigen Temperaturen bis zu 0°C. Die
Zusammensetzungen zeigen niedrige exotherme Temperaturspitzen. Beim Ausziehen als Ueberzüge neigen die Zusammensetzungen weniger zum "Ausschwitzen" als ähnliche Ueberzüge
auf Epoxidharzgrundlage, die nicht mit Polyacrylatester
modifiziert sind. Die Zusammensetzungen dieses Patents
besitzen niedrige Viskositäten, und ihre guten Benetzungseigenschaften sind offensichtlich, wie die hohe Haftfestigkeit beim Auftragen in dünnen Schichten auf Metall, Kunststoff, feuchten Beton und andere schwer benetzbare Substrate
zeigt.

Es besteht jedoch ein Bedarf für eine feststoffreiche oder lösungsmittelfreie Einkomponentenepoxygrundierung für industrielle Anstriche oder Produktdecklacke. Gegenwärtig verwendet man lösungsmittelhaltige Systeme zum
Spritz- und Walzenantrag auf Grundlage hoch molekularer,
mit Melamin oder phenolischen Härtern gehärteter Epoxyharze.
Diese Rezepturen bedingen einen niedrigen Feststoffgehalt,
was bedeutet, dass teure Lösungsmittel verbrannt werden
müssen, um die gesetzlichen Luftverschmutzungsvorschriften
zu erfüllen. Ausserdem erfordern diese Systeme ziemlich
hohe Temperaturen (von 163 bis 204°C) zur Härtung, um gehärtete Produkte mit ausreichenden Eigenschaften zu ergeben.

Gegenstand dieser Erfindung sind heisshärtbare Einkomponentenzusammensetzungen, die aus
(a) 95 bis 40 Gew.-%, bezogen auf das Gesamtgewicht der
Komponenten (a) und (b), mindestens eines Epoxyharzes mit
mehr als einer 1,2-Epoxygruppe pro Molekül,

- 3 -

(b) 5 bis 60 Gew.-%, bezogen auf das Gesamtgewicht der Komponenten (a) und (b), mindestens eines Acrylat- oder Methacrylatesters eines Polyols, wobei dieser Ester mehr als eine Acrylat- oder Methacrylatendgruppe enthält, und

(c) einem latenten Härter, der ein durch Umsetzung ungefähr äquimolarer Anteile eines unter Phthalsäureanhydrid, Hexahydrophthalsäureanhydrid, Tetrahydrophthalsäureanhydrid, Methyltetrahydrophthalsäureanhydrid, Polyazelainsäureanhydrid, Bernsteinsäureanhydrid und Dodecenylbernsteinsäureanhydrid oder deren Gemischen ausgewählten Anhydrids und eines unter Aethylendiamin, Diäthylentriamin, Triäthylentetramin, 1,3-Diaminopropan, 1,6-Diaminohexan, Imino-bis-(propylamin) und Methylimino-bis-(propylamin) oder deren Gemischen ausgewählten Polyamins bei einer Temperatur von $50^{\circ}C$ bis $160^{\circ}C$ in nichtwässrigem Medium erhaltenes Kondensationsprodukt darstellt, in einer solchen Menge, dass 30 bis 80 Teile Komponente (c) auf 100 Teile der Komponenten (a) plus (b) kommen, bestehen.

Die erfindungsgemässen Zusammensetzungen besitzen vorzugsweise einen hohen Feststoffgehalt oder sind lösungsmittelfrei. Gegenstand der Erfindung sind ferner die durch Härten dieser heisshärtbaren Zusammensetzungen erhaltenen gehärteten Produkte, insbesondere Ueberzüge.

Vorzugsweise liegt die Komponente (a) zu 80 bis 50 Gew.-% und besonders bevorzugt 70 bis 60 Gew.-% des Gesamtgewichts der Komponenten (a) und (b) vor.

Vorzugsweise liegt die Komponente (b) zu 20 bis 50 Gew.-% und besonders bevorzugt 30 bis 40 Gew.-% des Gesamtgewichts der Komponenten (a) und (b) vor.

Die Komponente (c) liegt vorzugsweise zu 35 bis 60 Teilen und besonders bevorzugt 40 bis 50 Teilen auf 100 Teile der Komponenten (a) plus (b) vor.

Die erfindungsgemäss verwendbaren Epoxidharze können gesättigt oder ungesättigt, aliphatisch, cycloaliphatisch oder heterocyclisch sowie monomerer oder polymerer Art sein. Das Epoxyharz der Komponente (a) besitzt zweckmässig ein Epoxidäquivalentgewicht von etwa 100 bis etwa

- 4 -

2 000 und insbesondere etwa 110 bis etwa 500. Vorzugsweise sollen die Epoxidharze Glycidyläther- oder -estergruppen enthalten und eher flüssig als fest sein. Besonders bevorzugt liegt als Epoxyharz der Komponente (a) der Glycidylpolyäther des 2,2-Bis-(4-hydroxyphenyl)-propans mit einem Epoxidäquivalentgewicht von etwa 175 bis etwa 250 vor.

Verwendbare Epoxidharze sind die sich von einem Epihalogenohydrin, z.B. Epichlorhydrin, und einem mehrwertigen Phenol ableitenden Glycidylpolyäther mehrwertiger Phenole. Beispiele für solche mehrwertige Phenole sind unter anderem Resorcin, Hydrochinon, Bis-(4-hydroxyphenyl)-2,2-propan, üblicherweise als Bisphenol A bezeichnet, 4,4'-Dihydroxybenzophenon, Bis-(4-hydroxyphenyl)-1,1-äthan, Bis-(4-hydroxyphenyl)-1,1-isobutan, Bis-(4-hydroxyphenyl)-2,2-butan, Bis-(2-dihydroxynaphthyl)-methan, Phloroglucin und Bis-(4-hydroxyphenyl)-sulfon. Weitere mehrwertige Phenole sind mehr als zwei gegebenenfalls substituierte, über Methylenbrücken verknüpfte Phenoleinheiten enthaltende Novolakharze sowie halogenierte, z.B. bromierte und chlorierte phenolische Verbindungen.

Ferner kommen als Epoxidharze die Glycidylpolyäther mehrwertiger Alkohole in Frage, die durch Umsetzung eines mehrwertigen Alkohols mit einem Epihalogenohydrin unter Verwendung eines sauren Katalysators, z.B. Bortrifluorid, und nachfolgende Behandlung des entstandenen Produkts mit einem alkalischen, Halogenwasserstoff abspaltenden Mittel hergestellt werden. Zu den bei der Herstellung dieser Polyepoxide verwendbaren mehrwertigen Alkoholen gehören Glycerin, Aethylenglykol, Propylenglykol, Diäthylenglykol, Hexandiol, Hexantriol, Trimethylolpropan, Trimethyloläthan, Pentaerythrit und dergleichen.

Auch kommen als Epoxidharze die Glycidylester sich von einem Epihalogenohydrin und einer Polycarbonsäure ableitender Polycarbonsäuren in Betracht. Beispiele dafür sind unter anderem Phthalsäure oder deren Anhydrid, Isophthalsäure, Terephthalsäure, Tetrahydrophthalsäure, Hexahydrophthalsäureanhydrid, Adipinsäure, dimerisierte Fettsäuren,

aus einer ungesättigten Fettsäure und Acrylsäure hergestellte zweiwertige Säuren und dergleichen.

Besonders bevorzugte Epoxidharze sind die Glycidylpolyäther mehrwertiger Phenole, insbesondere der Glycidylpolyäther von Bisphenol A.

Die erfindungsgemäss verwendbaren Acrylat- und Methacrylatester  von Polyolen sind beispielsweise die Acryl-
und Methacrylsäureester aliphatischer mehrwertiger Alkohole,
wie beispielsweise die Di- und Polyacrylate und Di- und
Polymethacrylate von Alkylenglykolen, Alkoxylenglykolen,
alicyclischen Glykolen und höheren Polyolen, wie Aethylenglykol, Triäthylenglykol, Tetraäthylenglykol, Tetramethylenglykol, Hexandiol, Trimethyloläthan, Trimethylolpropan,
Pentaerythrit, Dipentaerythrit, Tripentaerythrit und dergleichen sowie deren Gemische miteinander oder mit ihren
teilweise veresterten Analogen.

Typische Verbindungen sind unter anderem, ohne jedoch darauf beschränkt zu sein, Trimethylolpropan-triacrylat,
Trimethyloläthan-triacrylat, Trimethylolpropan-trimethacrylat, Trimethyloläthan-trimethacrylat, Tetramethylenglykoldimethacrylat, Aethylenglykol-dimethacrylat,  Triäthylenglykoldimethacrylat,  Pentaerythrit-triacrylat,
Pentaerythrit-tetraacrylat,  1,6-Hexandiol-diacrylat,
1,6-Hexandiol-dimethacrylat,  Dipentaerythrit-tetraacrylat, Dipentaerythrit-pentaacrylat und dergleichen.  Als
Acrylatester der Komponente (b) werden Pentaerythrit-triacrylat und Pentaerythrit-tetraacrylat sowie insbesondere
1,6-Hexandiol-diacrylat und Trimethylolpropan-triacrylat bevorzugt.

Additionsacrylat- oder -methacrylatester von Epoxidharzen, worin die hierin verwendeten Epoxidharze als Polyole anzusehen sind, sind ebenfalls geeignet.  Die zur Umsetzung mit Acryl- oder Methacrylsäure verwendbaren Epoxidharze sind solche wie oben beschrieben.

Die Epoxyharze (a) und die Acrylat- oder Methacrylatester (b) sind im allgemeinen handelsüblich oder können
nach bekannten Methoden unter Verwendung im Handel erhältlicher Ausgangsstoffe hergestellt werden.

Die latenten Härter der vorliegenden Zusammensetzungen sind in der U.S. Patentschrift Nr. 3 639 657 beschrieben, auf deren einschlägige Teile hiermit ausdrücklich
Bezug genommen wird.

Vorzugsweise liegt als latenter Härter das Kondensationsreaktionsprodukt äquimolarer Mengen von Phthalsäureanhydrid und Diäthylentriamin vor.

Die vorliegenden heisshärtbaren Zusammensetzungen
sind bei Normaltemperaturen länger als sechs Monate lagerfähig, ohne irgendwelche Anzeichen von Gelbildung. Die
latenten Härter weisen keinen freien oder verfügbaren Polyamingehalt auf, wogegen der Zusatz einer Spurenmenge freien
Polyamins zu dieser heisshärtbaren Zusammensetzung innerhalb weniger Tage bei Raumtemperatur zum Beginn der Gelierung führt.

Die erfindungsgemässen Zusammensetzungen können je
nach dem Endzweck und den gewünschten Eigenschaften mit verschiedenen Füllstoffen, Dispergiermitteln, Verstärkungsmitteln, Farbstoffen, Pigmenten und weiteren Zusatzstoffen vermischt werden. Die Zusammensetzungen können in Lösungsmitteln, z.B. aromatischen Kohlenwasserstoffen, Aethern,
Aether-estern, Aether-alkoholen, Estern, Alkoholen, Ketonen
und dergleichen, gelöst und in diesen zur Anwendung gebracht
werden. Wegen ihrer niedrigen Viskosität sind diese Zusammensetzungen jedoch besonders zur Verwendung ohne Lösungsmittel geeignet, d.h. bei 100 Gew.-% Feststoffgehalt.

Die erfindungsgemässen Zusammensetzungen sind überall verwendbar, wo Epoxidharze allgemein eingesetzt werden,
d.h. als Ueberzüge, Klebstoffe, Güsse, Formkörper, Vergiessmittel und dergleichen. Die vorliegenden Zusammensetzungen
sind latent, besitzen eine niedrige Viskosität und ergeben
Ueberzüge mit ausgezeichneten physikalischen Eigenschaften.

Die Produktdecklackindustrie verwendet derzeit lösungsmittelhaltige Epoxyüberzugssysteme niedrigen Feststoffgehalts. Die Endanwendungen für diese Ueberzüge schliessen
Büromöbel, Schliessfächer, Fahrradteile, Omnibusse und landwirtschaftliche Geräte ein.

- 7 -

Da gesetzliche Vorschriften die Industrie zur Erfüllung der neuesten Umweltschutzerfordernisse zwingen, sind
Einkomponentenepoxysysteme hohen Feststoffgehalts der neuen
Lage angemessen.

Sogar beim Erhitzen für bis zu 30 Minuten auf Temperaturen von 135 bis 160°C erfolgt keine Zersetzung der
latenten Härter unter Freisetzung von Polyamin. Erhitzen
dieser Härter auf höhere Temperaturen für längere Zeiträume
führt zu einer Umlagerung der Härter zu schlecht definierten
Produkten, die immer noch zur Härtungsreaktion der Epoxiharze und Acrylatester nützlich sind.

Die nachfolgenden Beispiele sind nur für Erläuterungszwecke beigefügt und sind nicht so auszulegen, als dass
sie die Art oder den Umfang der vorliegenden Erfindung in
irgendeiner Weise einschränken würden.

Beispiel 1: Man versetzt 125 g Diglycidyläther von Bisphenol A, mit einem Epoxidäquivalentgewicht von etwa 190
und einer Viskosität von etwa 12 000 mPa s bei 25°C, mit
83 g Trimethylolpropan-triacrylat und 120 g des fein verteilten, festen Reaktionsprodukts äquimolarer Mengen Phthalsäureanhydrid und Diäthylentriamin als latentem Härter. Das
Gemisch wird dann über Nacht auf einem Walzenmischer belassen, was eine gut dispergierte, einheitliche Zusammensetzung
mit einer Viskosität von 28 000 mPa s bei 25°C ergibt.

Beispiel 2: Man versetzt 94 g Diglycidyläther von Bisphenol
A gemäss Beispiel 1 mit 62 g 1,6-Hexandiol-diacrylat und
75 g des in Beispiel 1 beschriebenen latenten Härters. Das
Gemisch wird dann über Nacht auf einem Walzenmischer belassen, was eine gut dispergierte, einheitliche Zusammensetzung
mit einer Viskosität von 1 250 mPa s bei 25°C ergibt.

Die Lagerbeständigkeiten der Zusammensetzungen gemäss
Beispiel 1 und 2 bestimmt man durch Messung der Gelierungszeiten bei 170°C und der Viskosität der Zusammensetzungen
bei 25°C sowie Beobachtung der Neigung des dispergierten
festen latenten Härters, sich beim Stehen bei Raumtemperatur für längere Zeit aus der Zusammensetzung abzusetzen.
Diese Ergebnisse sind in Tabelle A angeführt.

Tabelle A

LAGERBESTAENDIGKEITSDATEN

| Zusammensetzung aus Beispiel | 1 | 2 |
|---|---|---|
| Gelierungszeiten (Sekunden, 170°C) | | |
| Anfänglich: | 30 | 60 |
| nach 2 Monaten: | 26 | 66 |
| nach 3 Monaten: | 25 | 69 |
| nach 4-5 Monaten: | Beginnende Gelierung | Beginnende Gelierung |
| Viskosität | | |
| (Raumtemperatur) mPa s | | |
| Anfänglich: | 28 000 | 1 250 |
| 2 Monate: | 20 000 Absetzen | Etwas Absetzen |
| 3 Monate: | 15 000 | Etwas Absetzen |
| 4-5 Monate: | 20 000 Absetzen | Etwas Absetzen |

Verschiedene Härtungspläne für die heisshärtbaren Zusammensetzungen und deren nach der Härtung erhaltene physikalische Eigenschaften sind in der Tabelle B angegeben. Der wichtigste spezielle Härtungsbereich ist 20-30 Minuten bei 130-160°C. Optimale physikalische Eigenschaften erhält man mit 20 Minuten Härtung bei 160°C. Die Zusammensetzung nach Beispiel 2 ergibt etwas bessere Schlagzähigkeit und Haftung. Die Tabelle zeigt auch einige physikalische Eigenschaften des Systems nach Beispiel 2 in Abhängigkeit von der Filmdicke. Bei 0,038 mm erhält man ausgezeichnete Schlagzähigkeit, Beständigkeit gegen Methyläthylketon (MEK) und Haftung.

## Tabelle B

### PHYSIKALISCHE EIGENSCHAFTEN BEI VERSCHIEDENEN HAERTUNGSPLAENEN

| Zusammensetzung nach Beispiel | 1 | 2 |
|---|---|---|
| **Härtungsplan: 20-30 Minuten bei 130°C** | | |
| Filmdicke (mm) | 0,0762 | 0,0762 |
| Härte (Bleistift) | 4H | 2H |
| Schlagzähigkeit (direkt/von der Rückseite) (mkg) | 0,276/0,046 | 0,414/0,046 |
| Haftung* ASTM D3359-76 | 5B | 5B |
| **Härtungsplan: 10 Minuten bei 160°C** | | |
| Filmdicke (mm) | 0,0762-0,0889 | 0,0635-0,0762 |
| Härte (Bleistift/Persoz, Sekunden) | 3H/324 | H/257 |
| Schlagzähigkeit (direkt/von der Rückseite) (mkg) | 0,23/0,023 | 0,506/0,46 |
| Haftung* | 4B | 5B |
| **Härtungsplan: 20 Minuten bei 160°C** | | |
| Filmdicke (mm) | 0,0508-0,0635 | 0,0508-0,0635 |
| Härte (Bleistift) | 3H | 3H |
| Schlagzähigkeit (direkt/von der Rückseite) (mkg) | 0,368/0,046 | 0,506/0,9 |
| Haftung* | 5B | 5B |

*Haftungsstufe: 5 = hervorragend  
4 = gut  
3 = befriedigend

Tabelle B, Fortsetzung:

| Zusammensetzung nach Beispiel | 1 | 2 |
|---|---|---|
| **Härtungsplan: 30 Minuten bei 160°C** | | |
| Filmdicke (mm) | 0,0609-0,0762 | 0,0762 |
| Härte (Bleistift) | 3H-4H | 3H |
| Schlagzähigkeit (direkt/von der Rückseite) (mkg) | 0,23/0 | 0,46/0,184 |
| Haftung* | 4B | 5B |
| **Härtungsplan: 12-20 Minuten bei 175°C** | | |
| Filmdicke (mm) | 0,0889-0,1016 | 0,0889 |
| Härte (Bleistift) | 4H | 4H |
| Schlagzähigkeit (direkt/von der Rückseite) (mkg) | 0,276/0,046 | 0,46/0.184 |
| Haftung* | 4B | 5B |

| | Zusammensetzung nach Beispiel 2 | |
|---|---|---|
| **Härtungsplan: 20 Minuten bei 160°C mit zunehmender Filmdicke** | | |
| Filmdicke (mm) | 3.048 | 0,0762 |
| Härte | 4H | 4H |
| Schlagzähigkeit (direkt/von der Rückseite) (mkg) | 0,14/0 | 0,506/0,9 |
| Beständigkeit gegen Methyläthylketon (Hin- und Her-reiben) | - | 200 mal |
| Haftung* | 5 | 5 |

*Haftungsstufe: 5 = hervorragend

- 11 -

Zur Messung der Korrosionsbeständigkeit werden durch Härtung der Zusammensetzungen nach Beispiel 1 und 2 hergestellte Ueberzüge auf kalt gewalzten Stahltafeln der Salzsprühnebelprüfung und Feuchtraumprüfung unterzogen. Die Ergebnisse sind in der Tabelle C angeführt. Die überzogenen Tafeln werden dann für Blasenbildung, Rosten und Haftungsverlust bewertet. Die Filme aus den Zusammensetzungen nach Beispiel 1 und 2 ergeben ausgezeichnete Beständigkeit gegen Blasenbildung und Rosten. In beiden System erfolgt jedoch ein starker Haftungsverlust. Der Ueberzug aus der Zusammensetzung nach Beispiel 1 ist das einzige System, das irgendwelche Anzeichen einer Wiederkehr der Haftung aufweist.

Tabelle C

| Salzsprühnebelbeständigkeit | 1 | 2 |
|---|---|---|
| Filmdicke (mm) | 0,0609 | 0,0508 |
| Blasenbildung (a) | 4MD | 10 |
| Rosten (b) | 9 (sehr schwach) | 9 |
| Kriechen | schwach | schwach |
| *Haftung (X-geschnittenes Band) | 0A | 0A |

| Feuchtraumbeständigkeit | | |
|---|---|---|
| Filmdicke (mm) | 0,0609 | 0,0508 |
| Blasenbildung | 10 (0 bis fein) | 10 |
| Rosten | 9 | 9 |
| *Wiederkehr der Haftung (X-Schnitt- und Gitterschnittprüfung) | 0A & 0B | 4A & 2B |

```
*Haftungsstufe:  A = X-Schnittprüfung      gemessen nach ASTM D3359-76
                 B = Gitterschnittprüfung

                 5A-B = hervorragend
                 4A-B = sehr gut
                 3A-B = gut
                 2A-B = befriedigend
                 1A-B = schlecht
                 0A-0B = sehr schlecht
```

(a) Blasenbildungsstufe: Grösse: 2 (gross) - 10 (fein), gemessen nach ASTM D714-56
Häufigkeit: D = dicht          M = mässig
MD = mässig dicht   F = gering.

(b) Rostbewertung: 4 (10% der Oberfläche) - 9 (sehr schwaches Rosten (0,02-0,01%
flächenmässig), gemessen nach ASTM D610-68

0092516

Sämtliche unter Verwendung des fein verteilten festen latenten Härters gemäss Beispiel 1 hergestellte Zusammensetzungen lassen sich leicht dadurch zur einer gut dispergierten, einheitlichen Zusammensetzung vermischen, dass man sie einfach über Nacht auf einem Walzenmischer belässt oder zwei Stunden in einem Schaufelmischer vermischt.

Beispiel 3: Man vermischt ein festes Gemisch aus 120 g Diglycidyläther von Bisphenol A mit einem Epoxidäquivalentgewicht von etwa 190 und 84 g des festen Reaktionsprodukts aus äquimolaren Mengen Phthalsäureanhydrid und Diäthylentriamin als latenten Härter mit 68 g 1,6-Hexandiol-diacrylat und mahlt dann 75 Stunden bei Raumtemperatur in einer Kugelmühle, was eine gut dispergierte, einheitliche Zusammensetzung ergibt.

Die Zusammensetzung besitzt eine Viskosität von 1 400 mPa s bei 25°C und bleibt 1 bis 2 Monate physikalisch stabil (ohne Anzeichen eines Absetzens der dispergierten Phase) sowie 6 Monate chemisch stabil (wie durch die konstante Gelierungszeit gemessen).

Beispiel 4: Man gibt 2 Gew.-% organisches Titanatdispergiermittel (KR 138S (R) der Kenrich Petrochemicals Co.) zu einem Komponentengemisch derselben Zusammensetzung wie in Beispiel 3. Nach dem Kugelmahlen besitzt die gut dispergierte einheitliche Zusammensetzung eine Viskosität von 1 600 mPa s bei 25°C. Gemäss den in Beispiel 3 angegebenen Kriterien ist diese Zusammensetzung 4 Monate physikalisch und chemisch stabil. Der Zusatz des organischen Titanatdispergiermittels erhöht die Viskosität nur geringfügig, ergibt jedoch eine deutliche Verbesserung der Dispergierbarkeit bzw. physikalischen Stabilität.

Beispiel 5: Zu einem Komponentengemisch derselben Zusammensetzung wie in Beispiel 3 gibt man 20% des Gesamtgewichts der Zusammensetzung an ausgewählten Pigmenten. Bei diesen handelt es sich um $TiO_2$ (15%), $BaSO_4$ (3,8%), $Fe_2O_3$ (0,8%) und $SrCrO_4$ (0,4%). Nach dem Kugelmahlen besitzt die gut dispergierte einheitliche Zusammensetzung eine Viskosität von 1 800 mPa s, wobei sich eine thixotrope Gelstruktur

- 14 -

entwickelt. Diese Zusammensetzung ist wie die aus Beispiel
4 sowohl physikalisch als auch chemisch 4 Monate lang stabil.
Es wird angenommen, dass die physikalische Stabilität dieser Zusammensetzung durch die thixotrope Gelstruktur verbessert wurde.

Beispiel 6: Man versetzt eine Lösung von 58 g in 108 g Diglycidyläther von Polypropylenglykol 425 gelöstem Diglycidyläther von Bisphenol A als Epoxyharz mit einem Epoxidäquivalentgewicht von ca. 483 mit 80 g 1,6-Hexandiol-diacrylat und 74 g Latentem Härter gemäss Beispiel 1. Nach Mischen auf dem Walzenmischer
über Nacht besitzt die gut dispergierte, einheitliche Zusammensetzung
eine Viskosität von 550 mPa s bei 25°C sowie 4 Monate physikalische und
chemische Stabilität.

Beispiel 7: Man versetzt ein Gemisch mit denselben Komponenten wie in Beispiel 6 mit 20% des Gesamtgewichts der
Zusammensetzung der gleichen Pigmente in den in Beispiel 5
angegebenen Mengen. Nach Mischen auf dem Walzenmischer
über Nacht besitzt die gut dispergierte, einheitliche Zusammensetzung eine Viskosität von 2 000 mPa s bei 25°C, wobei sich eine thixotrope Gelstruktur entwickelt. Diese
Zusammensetzung ist wiederum physikalisch und chemisch 4
Monate lang stabil. Es wird angenommen, dass die physikalische Stabilität dieser Zusammensetzung durch die thixotrope Gelstruktur verbessert wurde.

Die physikalischen Eigenschaften aus den Zusammensetzungen nach Beispiel 3 - 7 hergestellter, 0,0254 bis
0,0508 mm dicker, gehärteter Filme sind in der Tabelle D angegeben. Die Zusammensetzungen werden jeweils in Filmform
auf kalt gewalztem Stahl (CRS) durch 30 Minuten Erhitzen
auf 135°C gehärtet.

Tabelle D

Eigenschaften des gehärteten Films

| Zusammensetzung aus Beispiel | 3 | 4 | 5 | 6 | 7 |
|---|---|---|---|---|---|
| Härte, Bleistift / Persoz (Sekunden) | 8H / 357 | 5H / 350 | 4H / 256 | F-H / - | H / - |
| Schlagzähigkeit (direkt/von der Rückseite) (mkg) | 1,8/1,6 | 1,8/1,8 | 0,64/0,207 | >1,8/>1,8 | >1.8/1,8 |
| Haftung (am Substrat gemäss Gitterschnitt) | hervor-ragend | hervor-ragend | hervor-ragend | hervor-ragend | hervor-ragend |
| Dornumbiegungsversuch (6,35 mm) | gut | gut | gut | gut | gut |
| Salzsprühnebel, 300 Stunden (0,0508 mm über CRS); Rosten/Blasenbildung........ | hervor-ragend/ hervor-ragend | - | hervor-ragend/ hervor-ragend | - | - |
| Haftung.................... | gut | - | gut | - | - |
| Feuchtraum (0,0508 mm über CRS) | unver-ändert | - | unver-ändert | - | - |
| Benzinbeständigkeit (30 Minuten) | gut | gut | gut | - | gut |
| Destilliertes $H_2O$ (500 Stunden) | gut | gut | gut | - | - |
| Schichthaftung an Urethanen oder Acrylharzen | hervor-ragend | hervor-ragend | hervor-ragend | hervor-ragend | hervor-ragend |

- 16 -

Tabelle D beschreibt die Leistung der aus den Zusammensetzungen nach Beispiel 3 - 7 hergestellten Ueberzüge. Für die meisten der geprüften Systeme ist die Härte im Bereich 4H-8H hervorragend. Gleichzeitig weisen jedoch die Schlagzähigkeit und die Dornumbiegungsdaten auf einen biegsamen Ueberzug hin. Es zeigt sich hervorragende Haftung an kalt gewalztem Stahl, was die guten Ergebnisse für die Salzsprühnebelbeständigkeit erklärt (300 Stunden, kein Rosten). Die gute Beständigkeit gegen Benzin und destilliertes Wasser zeigt, dass die Härtung vollständig ist. Schliesslich besitzen sämtliche aus den Zusammensetzungen nach Beispiel 3 - 7 hergestellten Filme gute Haftung an handelsüblichen Urethanen und Acrylharzen.

Patentansprüche:

1.    Heisshärtbare Einkomponentenzusammensetzungen, dadurch gekennzeichnet, dass sie aus

(a) 95 bis 40 Gew.-%, bezogen auf das Gesamtgewicht der Komponenten (a) und (b), mindestens eines Epoxyharzes mit mehr als einer 1,2-Epoxygruppe pro Molekül,

(b) 5 bis 60 Gew.-%, bezogen auf das Gesamtgewicht der Komponenten (a) und (b), mindestens eines Acrylat- oder Methacrylatesters eines Polyols, wobei dieser Ester mehr als eine Acrylat- oder Methacrylatendgruppe enthält, und

(c) einem latenten Härter, der ein durch Umsetzung ungefähr äquimolarer Anteile eines unter Phthalsäureanhydrid, Hexahydrophthalsäureanhydrid, Tetrahydrophthalsäureanhydrid, Methyltetrahydrophthalsäureanhydrid, Polyazelainsäureanhydrid, Bernsteinsäureanhydrid und Dodecenylbernsteinsäureanhydrid oder deren Gemischen ausgewählten Anhydrids und eines unter Aethylendiamin, Diäthylentriamin, Triäthylentetramin, 1,3-Diaminopropan, 1,6-Diaminohexan, Imino-bis-(propylamin) und Methylimino-bis-(propylamin) oder deren Gemischen ausgewählten Polyamins bei einer Temperatur von 50°C bis 160°C in nicht-wässrigem Medium erhaltenes Kondensationsprodukt darstellt, in einer solchen Menge, dass 30 bis 80 Teile der Komponente (c) auf 100 Teile der Komponenten (a) plus (b) kommen, bestehen.

2.    Zusammensetzungen nach Anspruch 1, dadurch gekennzeichnet, dass die Komponente (a) zu 80 bis 50 Gew.-% des Gesamtgewichts der Komponenten (a) und (b), die Komponente (b) zu 20 bis 50 Gew.-% des Gesamtgewichts der Komponenten (a) und (b) und die Komponente (c) zu 35 bis 60 Teilen auf 100 Teile der Komponenten (a) plus (b) vorliegt.

3.    Zusammensetzungen nach Anspruch 2, dadurch gekennzeichnet, dass die Komponente (a) zu 70 bis 60 Gew.-% des Gesamtgewichts der Komponenten (a) und (b), die Komponente (b) zu 30 bis 40 Gew.-% des Gesamtgewichts der Komponenten (a) und (b) und die Komponente (c) zu 40 bis 50 Teilen auf 100 Teile der Komponenten (a) plus (b) vorliegt.

4.    Zusammensetzungen nach Anspruch 1, dadurch gekennzeichnet, dass das Epoxyharz der Komponente (a) ein Epoxidäquivalentgewicht von etwa 100 bis etwa 2'000 aufweist.

5.     Zusammensetzungen nach Anspruch 1, dadurch gekennzeichnet, dass das Epoxyharz der Komponente (a) ein Epoxidäquivalentgewicht von etwa 110 bis etwa 500 aufweist.

6.     Zusammensetzungen nach Anspruch 1, dadurch gekennzeichnet, dass als Epoxyharz der Komponente (a) der Digly-cidylpolyäther des 2,2-Bis-(4-hydroxyphenyl)-propans mit einem Epoxidäquivalentgewicht von etwa 175 bis etwa 250 vorliegt.

7.     Zusammensetzungen nach Anspruch 1, dadurch gekenn-zeichnet, dass als Acrylatester der Komponente (b) 1,6-Hexandiol-diacrylat vorliegt.

8.     Zusammensetzungen nach Anspruch 1, dadurch gekenn-zeichnet, dass als Acrylatester der Komponente (b) Trime-thylolpropan-triacrylat vorliegt.

9.     Zusammensetzungen nach Anspruch 1, dadurch gekenn-zeichnet, dass als latenter Härter der Komponente (c) das Kondensationsreaktionsprodukt äquimolarer Anteile von Phthalsäureanhydrid und Diäthylentriamin vorliegt.

10.     Gehärtete Produkte, erhalten durch Härtung von Zusammensetzungen nach Anspruch 1.

**Europäisches Patentamt**

# EUROPÄISCHER RECHERCHENBERICHT

Nummer der Anmeldung

EP 83 81 0141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | US-A-4 051 195 (W.F. McWHORTER) * Ansprüche 1-6 * | 1-8 | C 08 G 59/44 C 08 L 63/00 |
| | --- | | |
| A | DE-A-2 936 126 (GROW GROUP INC.) * Seite 6, Zeile 31 - Seite 8, Zeile 30; Seite 9, Zeile 29 - Seite 10, Zeile 28 * | 1,9-10 | |
| | ----- | | |

**RECHERCHIERTE SACHGEBIETE (Int. Cl. 3)**

C 08 G 59/44
C 08 L 63/00
C 09 D 3/00

Der vorliegende Recherchenbericht wurde für alle Patentansprüche erstellt.

| Recherchenort BERLIN | Abschlußdatum der Recherche 08-07-1983 | Prüfer IDEZ C.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82